# EUROPEAN PATENT SPECIFICATION

(11) **EP 4 082 411 B1**
(45) Date of publication and mention of the grant of the patent: **23.10.2024**
(21) Application number: 22168777.5
(22) Date of filing: 19.04.2022
(51) Int. Cl.: A47J 37/12

(54) **AUTOMATED COOKING SYSTEM AND METHOD USING BASKET-GANTRY INTERFACE**
AUTOMATISCHES KOCHSYSTEM UND VERFAHREN MIT KORB-PORTAL-SCHNITTSTELLE
SYSTÈME DE CUISSON AUTOMATIQUE ET PROCÉDÉ UTILISANT UNE INTERFACE PANIER-PORTIQUE

(30) Priority: 29.04.2021 US 202117244096; 10.06.2021 US 202117344063; 04.03.2022 US 202217686816
(43) Date of publication of application: 02.11.2022
(73) Proprietor: Henny Penny Corporation, Eaton, OH 45320 (US)
(72) Inventor: Reichelderfer, Kimberly, Yellow Springs, 45387 (US); Thomas M., Smith, Lewisburg, 45338 (US); Pereira, Adrian Jason, Dayton, 45409 (US); Maddux, Michael, Kettering, 45440 (US)
(74) Representative: Eisenführ Speiser

(56) References cited:
- WO-A1-2019/136406
- US-A- 5 172 328
- US-A- 5 191 918
- US-A- 5 224 415
- US-A1- 2007 214 968

## Description

### Cross-Reference to Related Applications

This application claims priority to each of the following related parent applications: U.S. Patent Application No. 17/244,096, filed April 29, 2021; U.S. Patent Application No. 17/344,063, filed June 10, 2021; and U.S. Patent Application No. 17/686,816, filed March 4, 2022.

### Technical Field

This application relates generally to a food product cooking system. More specifically, this application describes mechanisms for adding time and labor efficiencies in food production environments such as restaurants.

### Background

Cooking apparatuses, such as fryers, are used to cook various food products, e.g., poultry, fish, potato products, and the like. Such cooking apparatuses may include one or more cooking chambers, e.g., fryer pots or vats, which may be filled with a cooking medium, e.g., an oil, a liquid shortening, or a meltable-solid shortening. Such cooking apparatuses also may include a heating element, e.g., an electrical heating element, such as a heating coil, or a gas heating element, such as a gas burner and gas conveying tubes, which heats the cooking medium in the cooking chamber. After the cooking medium reaches a preset cooking temperature, food products are placed into the cooking medium such that the food products are cooked in the cooking medium. For example, the food products may be positioned inside a basket, e.g., a wire basket, and submerged in the cooking medium for a predetermined amount of time sufficient to cook the food products. Conventional fryers typically require basket movement and workflow to be handled manually by an operator. In such fryers, the maximum production of the fryer is often limited by the responsiveness of the operator and their ability to manage multiple baskets and cooking tasks at the same time.

However, restaurants continue to strive to increase production in order to satisfy customer demand. One way to increase production is to utilize a high-volume fryer, such as by replacing a restaurant's pre-existing traditional open fryer with a high-volume fryer. However, high-volume fryers are typically relatively large, and restaurants must operate within the space constraints imposed by the buildings which they occupy. As a result, restaurant equipment, including fryers, must be sized to fit within certain parameters. For example, kitchen layouts may allow a particular amount of space for a fryer and may be unable to accommodate fryers having footprints greater than that space. Some restaurants may allow a footprint of about 228,6-254 cm (90-100 inches) by about 76,2 cm (30 inches) for a fryer, as well as an associated preparation or holding area. A high-volume fryer of a conventional design may require significantly more space than this. Many restaurants would be required to undergo substantial building renovations, replace previously installed hoods, or sacrifice space intended for other uses in order to reap the benefits of high-volume fryers. Those reconfigurations are expensive, highly disfavored, and sometimes impossible.

Thus, it would be desirable to provide systems and methods to cook food product in a more efficient manner, specifically with regard to time and labor considerations within a restaurant, while also achieving higher maximum production levels than traditional fryer systems and methods relying on manual manipulation and handling of baskets.

US 5,172,328 A relates to a fully automated robotized system and a method for cooking food products. The system uses a plurality of fry baskets to prepare food products like French fries. Each fry basket comprises a gripping handle, which is configured to be gripped by a gripping unit of the system.

WO 2019/136406 A1 relates to an automatic fryer system, which includes a fry basket, a fryer unit, a horizontal and a vertical drive system and an actuator for grasping and holding the fry basket. The fry basket comprises a vertical member at which indentations are formed, which cooperate with first and second clamps of the grasping actuator.

### Summary

In accordance with embodiments of the invention, aspects of an automated cooking system and a corresponding method for discharging cooked food product are described. Aspects of an automated cooking system and a corresponding method for discharging cooked food product help to avoid the problems associated with manually operating a cooking system. Specifically, the aspects of an automated cooking system described herein provide for systems and methods to cook and dispense food product in a more efficient manner with regard to both time and labor considerations within the constraints of a restaurant.
The problem stated above is solved by an automated cooking system according to claim 1.

In one implementation of the invention, an automated cooking system including a fryer basket and a gantry according to claim 1 is provided.

In one embodiment, the head portion is substantially coextensive in diameter with the main body. Further, the main body and the head portion are tapered inwards towards the neck portion to help correct potential misalignment of the jaws of the clamping gripper on the pickup point. Moreover, the neck portion is substantially coextensive in width to the jaws of clamping gripper.

In another embodiment, the pickup point includes a flat surface along a chord of a cross-section of the neck portion. The pickup point also includes a dowel located above the flat surface of the neck portion. The dowel spans a distance from the head portion to the main body. Additionally, at least the dowel is configured to engage with the jaws of the clamping gripper to prevent uncontrolled rotational movements of the basket when the basket is moved as to avoid impacts of the basket with any other basket of the automated cooking system.

Additionally, each of the jaws of the clamping gripper is C-shaped as to snugly fit the pickup point between the pair of jaws when engaging with the basket. Moreover, an edge of the jaw that contacts the pickup point of the basket is contoured to facilitate easier gripping of the pickup point.

In a further embodiment, the basket further includes a product discharge mechanism positioned adjacent the frame and operatively coupled to the angled panels. Additionally, the gantry further includes an actuator arm configured to interact with the basket, suspended in place by the clamping gripper, in such a way as to cause the basket to discharge its contents. Moreover, the actuator arm is pneumatically powered. Further, when not in active use the actuator arm is rotated away from the front of the gantry as to not cause inadvertent contact with the basket.

In one embodiment, the automated cooking system further includes a basket detection device. The basket detection device is configured to detect the presence of a basket in front of the clamping gripper. The basket detection device is used to line up the jaws of the clamping gripper with the pickup point of the basket. Further, the basket detection device can be selected from the group consisting of a proximity switch, a torque sensor, and a laser.

The steps and elements described herein as part of various embodiments and aspects can be reconfigured and combined in different combinations to achieve the desired technical effects as may be desired. To this end, the embodiments and aspects can be combined in any combination or sub-combination.

### Brief Description of the Drawings

Various additional features and advantages of the invention will become more apparent to those of ordinary skill in the art upon review of the following detailed description of one or more illustrative embodiments taken in conjunction with the accompanying drawings. The accompanying drawings, which are incorporated in and constitute a part of this specification, illustrate one or more embodiments of the invention and, together with the general description given above and the detailed description given below, serve to explain the one or more embodiments of the invention.
FIG. 1 is a front perspective view of an automated cooking system in accordance with an embodiment of the invention, which is not within the scope of the claims.
FIG. 2 is a front perspective view of a fryer included in the automated cooking system of FIG. 1, which is not within the scope of the claims, but with the gantry removed for purposes of illustration
FIG. 3 is a front perspective view of a fryer basket in accordance with an embodiment of the invention.
FIG. 4 is a front perspective detail view of a fryer basket, similar to FIG. 3.
FIG. 5A is a front view of a fryer basket, showing the angled panels in a closed position.
FIG. 5B is a rear view of the fryer basket of FIG. 5A.
FIG. 6A is a front view of a fryer basket similar to FIG. 5A, showing the product discharge mechanism actuated and the angled panels in an open position.
FIG. 6B is a rear view of a fryer basket, similar to FIG. 5B, showing the angled panels in an open position.
FIG. 7A is a front perspective view of a pickup point in accordance with an embodiment of the invention.
FIG. 7B is a side view of the pickup point of FIG. 7A.
FIG. 7C is a front cross-sectional view of the pickup point of FIG. 7A.
FIG. 8A is a front cross-sectional view of a clamping gripper of the gantry used with the automatic cooking system of FIG. 1, showing the clamping gripper in an open position.
FIG. 8B is a front cross-sectional view of the clamping gripper of FIG. 8A, showing the clamping gripper clamped into engagement with the pickup point of the basket.
FIG. 9A is a front perspective view of a portion of a gantry in accordance with an embodiment of the invention, showing the actuator arm rotated away from the front of the gantry.
FIG. 9B is a front perspective view of a portion of the gantry of FIG. 9A, showing the actuator arm in a position to interact with a fryer basket.
FIG. 10A is a detail view of the interaction between the actuator arm and the discharge mechanism in accordance with an embodiment of the invention.
FIG. 10B is a detail view similar to FIG. 10A, showing the actuator arm actuating the discharge mechanism.
FIG. 11A is a front (partially cross-sectioned) view of a fryer similar to the one shown in FIG. 2, and more particularly showing a plurality of baskets on platforms at various stages of a cooking cycle, an exemplary process of which is shown in this series of Figures, which is not within the scope of the claims.
FIG. 11B is a front view similar to FIG. 11A, showing a further stage of the exemplary cooking cycle using the automated cooking system, which is not within the scope of the claims.
FIG. 11C is a front view similar to FIG. 11A, showing another stage of the exemplary cooking cycle using the automated cooking system, which is not within the scope of the claims.
FIG. 11D is a front view similar to FIG. 11A, showing yet another stage of the exemplary cooking cycle using the automated cooking system, which is not within the scope of the claims.
FIG. 11E is a front view similar to FIG. 11A, showing a further stage of the exemplary cooking cycle using the automated cooking system, which is not within the scope of the claims.
FIG. 11F is a front view similar to FIG. 11A, showing another stage of the exemplary cooking cycle using the automated cooking system, which is not within the scope of the claims.
FIG. 11G is a front view similar to FIG. 11A, showing yet another stage of the exemplary cooking cycle using the automated cooking system, which is not within the scope of the claims.

### Detailed Description

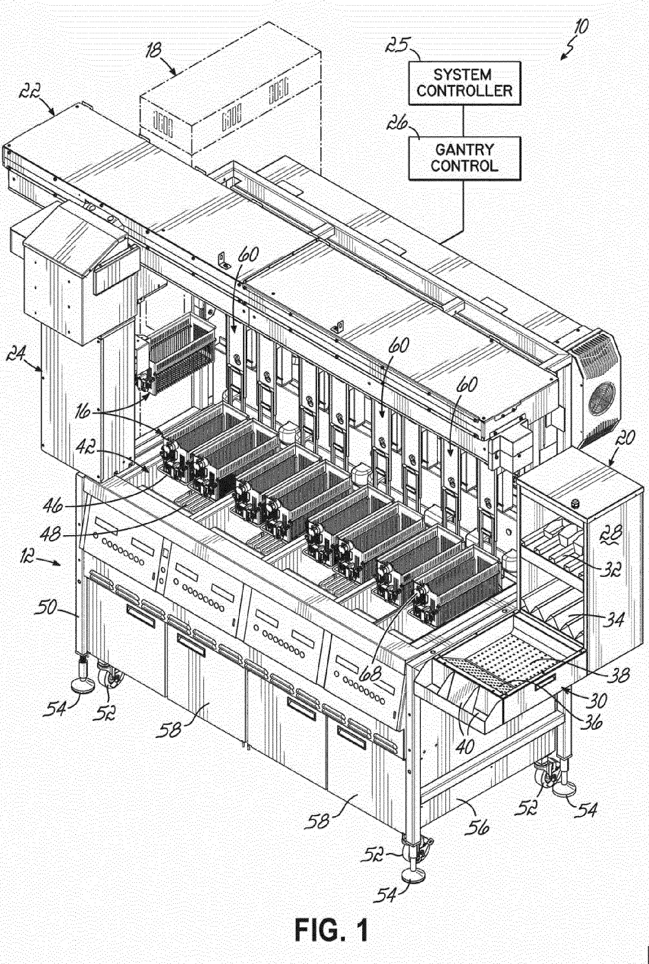

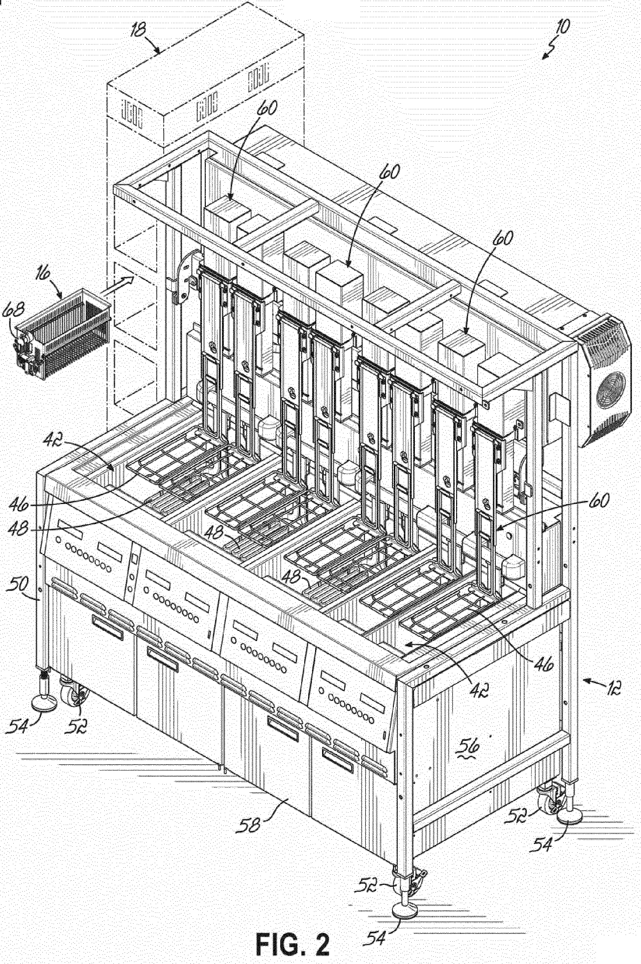

With reference to FIGS. 1 and 2, an automated cooking system 10 including a fryer 12 is shown in accordance with an exemplary embodiment which is not within the scope of the claims. As set forth in further detail below, the system 10 and fryer 12 provide improved efficiency in cooking operations. The cooking system 10 achieves the increased production by efficiently managing the workflow of baskets 16 moving between a dispensing freezer 18, the fryer 12, and a hot holding station 20. More specifically, the workflow of baskets 16 is primarily achieved using a gantry system 22. The gantry system 22 includes a gantry 24 and a gantry control 26, which may be a part of or separate from a system controller 25 for the automated cooking system 10. The gantry 24 of this system 10 engages with and actuates the baskets 16 using innovative interface elements described below that collectively improve both the movement precision and reliability for baskets 16 while also allowing for better system cycle efficiencies resulting at least in part from rapid basket opening and closing operations performed using such interface elements. The system 10 described herein provides for cooking food product 14 in a more efficient manner with regard to both time and labor considerations within the constraints of a restaurant. The features of the automated cooking system 10 and the fryer 12 are set forth in further detail below to clarify each of these functional advantages and other benefits provided in this disclosure. Other advantages and technical effects of the embodiments of this invention will become evident to one skilled in the art from the following description.

Continuing with reference to FIG. 1, an exemplary automated cooking system, which is not within the scope of the claims, 10 is shown. The automated cooking system 10 includes the fryer 12, a plurality of baskets 16, a dispensing freezer 18, a hot holding station 20, and a gantry system 22. The dispensing freezer 18 is of a mostly conventional design, and thus, is not shown in significant detail in the Figures. However, the dispensing freezer 18 shown in this embodiment includes a dispenser (not shown) for dispensing food product 14. Food product 14, for example, waffle fries, are dispensed into a basket 16 from the dispenser of the dispensing freezer 18, cooked in the fryer 12, and then transferred from the fryer 12 to the hot holding station 20 via the baskets 16, as discussed in greater detail below.

The hot holding station 20 of the embodiment shown in FIG. 1 receives cooked food product 14 from the basket 16 of the fryer 12, to thereby enable operator manipulation and packaging to finalize preparation of the food products 14 for delivery to fulfill customer demands, as well understood in the restaurant field. The hot holding station 20 is of conventional design and is briefly described as follows: it includes a hot holding cabinet 28 and a hot holding receiving area 30. As shown, the hot holding cabinet 28 may include a plurality of vertical slots 32 or angled corrugated slots 34 to hold the now cooked food product 14. For example, the hot holding receiving area 30 may include an angled front portion 36, and a plurality of air flow apertures 38 to enable circulating air flow to help the cooked food product 14 remain in a desirable state. Receptacles 40 for holding packaging to load food products 14 into may be located in the front of the hot holding receiving area 30. Since the throughput of this automated cooking system 10 exceeds current systems, the hot holding receiving area 30 is generally larger to enable one or more workers to package the cooked food product 14 and keep up with the throughput of the automated cooking system 10. It will be understood that other types of hot holding 20 and preparation stations may be used with the fryer 12 in other embodiments. For example, an automated holding and packaging station may be later developed and combined with the features of the automated cooking system 10 described in detail below, without departing from the scope of this disclosure.

Still referring to FIG. 1, interfacing with a touch-screen control (not shown) or the like according to an embodiment, the operator selects the quantity of food product 14 and the repeating rate upon which they wish to cook, and the automated cooking system 10 automatically optimizes the dispensing schedule from the freezer 18 and where to perform the cooking within the fryer 12. It will be understood that the food products 14 to be cooked and the production rate may also be communicated to the cooking system 10 by other methods, including wireless communication from order management computer(s) that receive customer demands for food product 14 and facilitate restaurant employees with fulfilling customer demands and orders accordingly. Regardless of how the control parameters are set, the automated cooking system 10 generally operates as follows: it automatically raises the predetermined basket 16, moves the basket 16 to the position to accept the uncooked food product 14, moves the basket 16 to the proper cooking chamber, e.g., fryer vat 42, location, lowers the basket 16 into the cooking medium 44, raises the basket 16 once cooked and moves the basket 16 to be dispensed into the hot holding receiving area 30, and then moves the basket 16 back to a predetermined location at the fryer 12 or back to the freezer 18 to accept more uncooked food product 14.

In an embodiment which is not within the scope of the claims, the system controller 25 of the automated cooking system 10 may be configured to implement different modes of the system 10 or fryer 12. In any event, the system controller 25 may be operatively coupled to a dispensing mechanism of the dispensing freezer 18 to enable coordination between the dispensing of uncooked food product 14 from the dispensing freezer 18 into the basket 16, such that a predetermined amount of food product 14 is dispensed into the basket 16. The system controller 25 may also interface with other equipment in a fully automated fashion, to cause cooking of food product 14 in response to customer orders or demand. To this end, while the system controller 25 is referred to separately from the gantry control 26 previously described and shown in FIG. 1, it will be appreciated that the gantry control 26 may be an integral part of a single system controller 25 operating all elements of the cooking system 10 without departing from the scope of this invention.

Also initially shown in FIG. 1, the fryer 12 also includes a gantry system 22 that is configured to move a basket 16 between a plurality of positions at the fryer 12. The gantry system 22 includes a gantry 24. The gantry 24 is moved by the gantry system 22 using a motor (not shown) which is controlled using a gantry control 26 enabling the gantry 24 to move to a desired position. The gantry control 26 interfaces with or is part of a system controller 25 (schematically shown in FIG. 1), which is described in greater detail below. The gantry system 22 is configured to service each platform 46 associated with each fryer vat 42 with a basket 16.

Referring now to FIG. 2, an exemplary embodiment of the fryer 12 used in the automatic cooking system 10 is shown, which is not within the scope of the claims. The system 10 includes a frame 50 mounted on a plurality of casters or wheels 52, so that the fryer 12 may be easily moveable on a surface, such as a floor. In one embodiment, one or more of the wheels 52 are lockable to prevent unwanted movement of the fryer 12 during operation. In a further embodiment, the frame 50 includes feet 54 so that the frame 50 of the system 10 is not placed directly onto a surface, such as a floor. In one embodiment, the feet 54 are adjustable such that the system 10 can be raised or lowered to a desired height above a surface, such as a floor. Alternatively, the wheels 52 or feet 54 may be eliminated if desired. A plurality of wall panels 56 are provided on the frame 50 to strengthen the frame 50. Various fryer components such as, for example, oil filtration and recirculation components, may be supported by or housed by the frame 50 within the wall panels 56. These fryer components are of a conventional design, and thus, are not shown in detail in the figures. Cabinets 58 may be located near the bottom of the fryer 12 and may be used to remove already-used cooking medium 44. According to another embodiment, cabinets 58 may be used as storage for unused cooking medium 44 or other products.

With continued reference to FIG. 2, in an embodiment not within the scope of the claims, the fryer 12 includes five fryer vats 42, each configured to hold a cooking medium 44. As shown, each fryer vat 42 is configured to hold at least one basket 16. However, more or fewer fryer vats 42 are also envisioned, with each fryer vat 42 being configured to hold one or more baskets 16. For example, the fryer 12 may feature three fryer vats 42 wherein each fryer vat 42 is configured to accommodate two platforms 46 (and thus two cooking baskets 16) each, for a total of six platforms 46 and six baskets 16. At least one heating element 48 is disposed within each fryer vat 42. However, it is envisioned that each fryer vat 42 may include any suitable number of heating elements 48 in any arrangement, as may be desired. The heating element 48 is configured to heat the cooking medium 44 to a predetermined temperature so as to cook the food products 14 therein. Further, in an embodiment the fryer 12 includes vertical transport assemblies 60, which are configured to raise and lower the baskets 16 into and out of the fryer vats 42 on platforms 46 attached to the vertical transport assemblies 60. It is envisioned that each fryer vat 42 may contain a single basket 16, which is movable on a platform 46 of one of the vertical transport assemblies 60. Alternatively, a fryer vat 42 may accommodate two or more baskets 16, each moveable on a separate platform 46 on a separate vertical transport assembly 60. It is also envisioned that a basket 16 may be used with different fryer vats 42 or different platforms 46 of the vertical transport assemblies 60. Mounted in the rear of the frame 50 are the motors and other corresponding components (not shown) for each of the vertical transport assemblies 60.

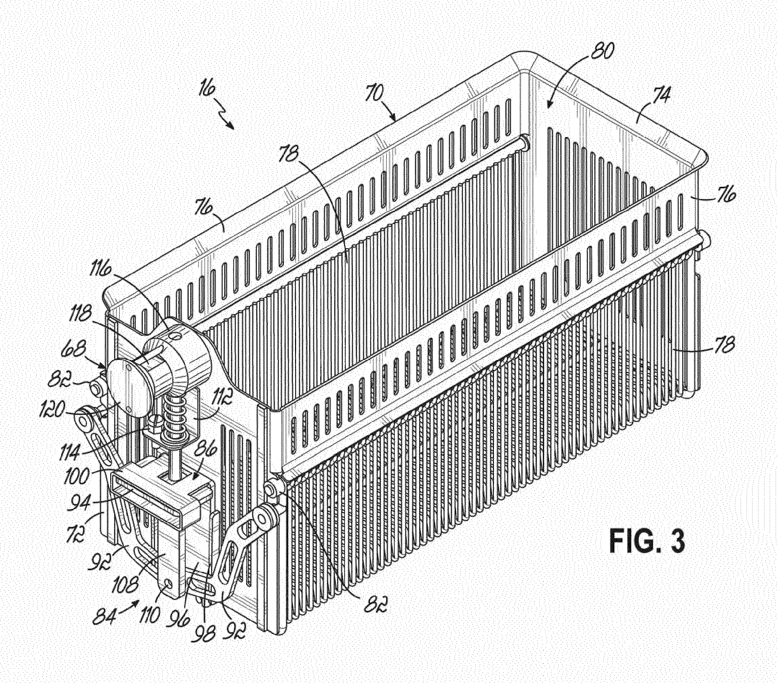

Referring now to FIGS. 3-6B, these Figures illustrate an embodiment of the basket 16. As shown in FIG. 3, the shape of the basket is defined by the basket frame 70. The basket frame 70 is made up of a series of connected panels-the front panel 72, the back panel 74, and two side panels 76. The panels 72, 74, 76 are connected to each other at or near their sides edges. Specifically, the front panel 72 is connected at one edge to a side panel 76 and at an opposing edge to a different side panel 76. Similarly, the back panel 74 is connected at one edge to a side panel 76 and at an opposing edge to a different side panel 76. Together, the panels 72, 74, 76 form a rectangular cuboid shape with two opposing open faces-the top and the bottom of the basket frame 70. It is to be understood that other constructions and shapes of the basket 16 are possible. Further, it is to be understood that the front 72, back 74, and side panels 76 could be different sizes from one another depending on a user's needs or preferences. For example, FIG. 3 shows that the side panels 76 of the basket 16 are significantly shorter than the front and back panels 72, 74. In the pictured embodiment, the side panels 76 are shortened to allow for the addition of angled panels 78, described in further detail below. Regardless of the shape or construction of the basket frame 70, the interior of the connected panels 72, 74, 76 defines the bounds of a storage space 80 therein. The storage space 80 is used to, for example, hold food product 14.

Completing the bounds of the storage space 80 of the basket 16 are the two angled panels 78. Each angled panel 78 is roughly L-shaped. It is to be understood that the angled panels 78 could be differently shaped and still perform the function described herein. An angled panel 78 is coupled to and extends from each of the side panels 76. Specifically, an angled panel 78 extends downwardly from a side panel 76 and then extends inwardly, towards a center of the basket 16 along a bottom face of the basket 16. The angled panels 78 are coupled to the side panels 76 and are configured to pivot about their couplings 82-between a closed position and an open position. In the closed position, the edges of the angled panels 78 are approximately coextensive with the edges of the front and back panels 72, 74 such that they, collectively, define a closed bottom of the storage space 80. Further, the edges of the angled panels 78 meet each other roughly in the middle of the bottom face of the basket 16. Thus, in the closed position the angled panels 78 form the bounds for the bottom and part of the sides of the basket 16 to prevent food product 14 from falling out of the basket 16. Transitioning from the closed position to the open position, the angled panels 78 pivot about their couplings 82 to extend outwardly from the side panels 76 to form an opening in at least the bottom of the basket 16. The opening may also extend to the side of the basket 16 depending on where the angled panels 78 are coupled to the side panels 76. Regardless, with the angled panels 78 in the open position food product 14 in the basket 16 will exit the basket 16 through an opening in at least the bottom of the basket 16 formed by the absence of the angled panels 78 (e.g., the angled panels 78 no longer form a bottom of the basket 16). When the angled panels 78 are in the open position, the baskets 16 are configured such that food product 14 will exit the basket 16 in less than 10 seconds. Specifically, the baskets 16 are configured to be emptied of food product 14 in less than 5 seconds. Such rapid evacuation of the food product 14 from the basket 16 when the angled panels 78 transition from the closed position to the open position offers an advantage over some other baskets known in the art.

Still referring to FIG. 3, a product discharge mechanism 84 is positioned on the front panel 72 of the basket 16. The product discharge mechanism 84 functions to control the position of the angled panels 78-which in turn determines if and when the basket 16 will discharge food product 14. Specifically, the product discharge mechanism 84 is responsible for changing the position of the angled panels 78 from a closed position to an open position and vice versa. The product discharge mechanism 84 is coupled to both of the angled panels 78 such that actuating the product discharge mechanism 84, in turn, causes the angled panels 78 to change position (e.g., from closed to open or vice versa). The product discharge mechanism 84 is biased to keep the angled panels 78 in the closed position until the product discharge mechanism 84 is actuated. Actuating the product discharge mechanism 84 generates pivotal movement of the angled panels 78 about their couplings 82 such that the angled panels 78 move away from each other into an open position. In the open position, the angled panels 78 no longer form the bottom face of the storage space 80 of the basket 16. In other words, in the open position an opening or void is created in the bottom of the basket 16. Thus, when the angled panels 78 are in the open position, the food product 14 can exit the basket 16, for example into the hot holding receiving area 30. Further, when the product discharge mechanism 84 is not actuated, the product discharge mechanism 84 returns the angled panels 78 to the closed position-thereby creating a bottom 'floor' for the basket 16-so that more food product 14 can be deposited into the storage space 80 of the basket 16.

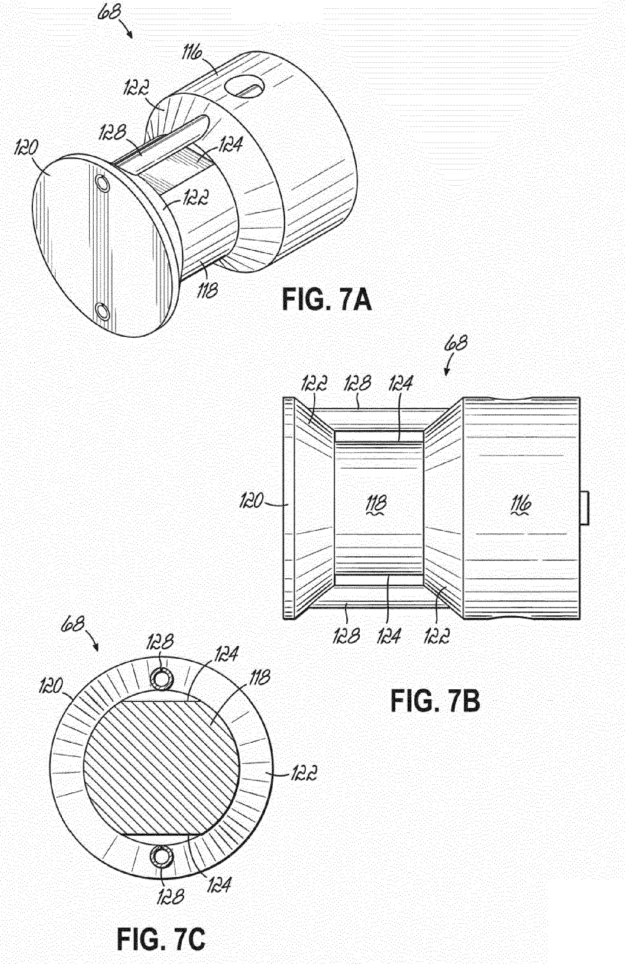

Still referring to FIG. 3, located near the top of the front panel 72 of the basket 16 and connected to the product discharge mechanism 84 is the pickup point 68. The pickup point 68 is described in greater detail below with respect to FIGS. 7A-7C. Briefly, the pickup point 68 is configured to be gripped, for example, by the clamping gripper 66 so that the basket 16 can be moved from location to location within the automated cooking system 10. Features of the pickup point 68 provide for greater ease of handling and enhanced stability when gripping and transporting the basket 16 by the pickup point 68.

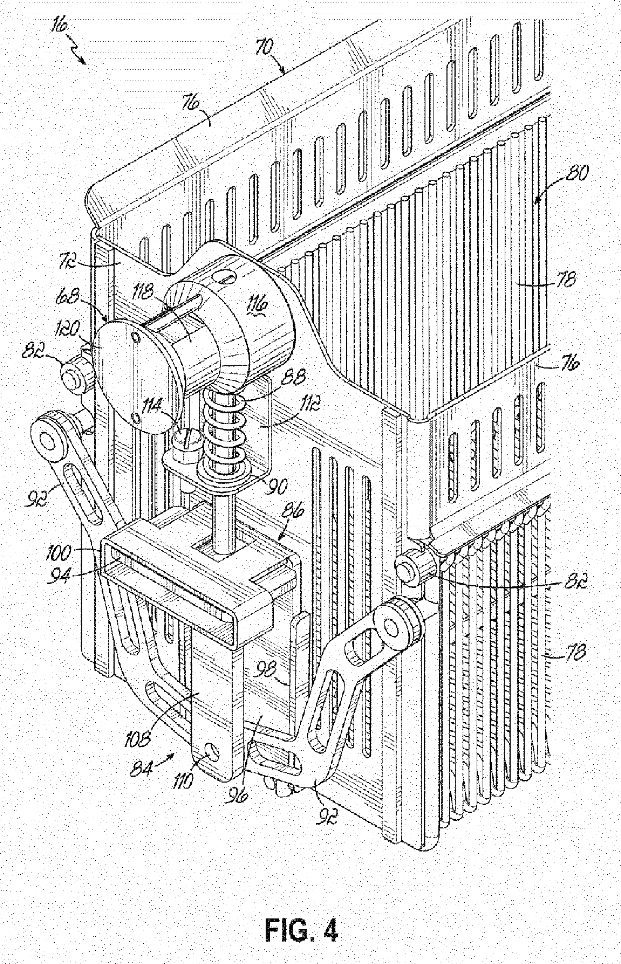

Turning to FIG. 4, the Figure shows the product discharge mechanism 84 in greater detail. Generally, the product discharge mechanism 84 serves to maintain the angled panels 78 in a closed position until the product discharge mechanism 84 is actuated. When actuated, the product discharge mechanism 84 moves the angled panels 78 from the closed position to an open position. After actuation, the product discharge mechanism 84 moves the angled panels 78 back to the closed position from the open position.

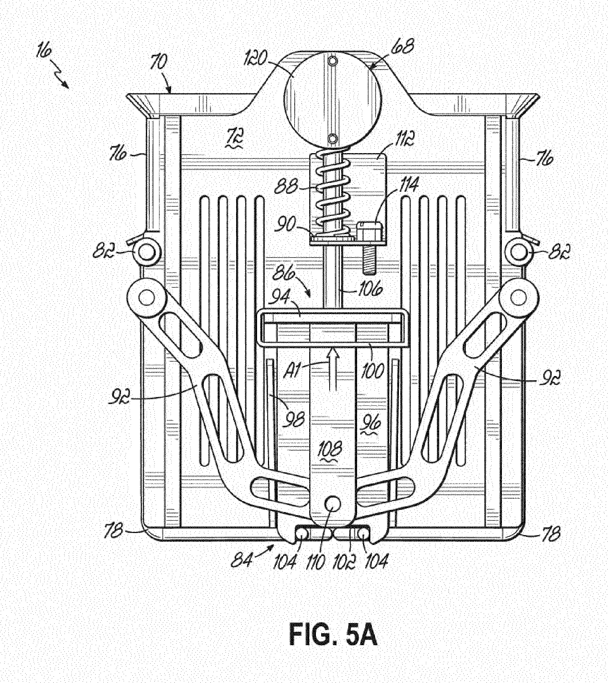

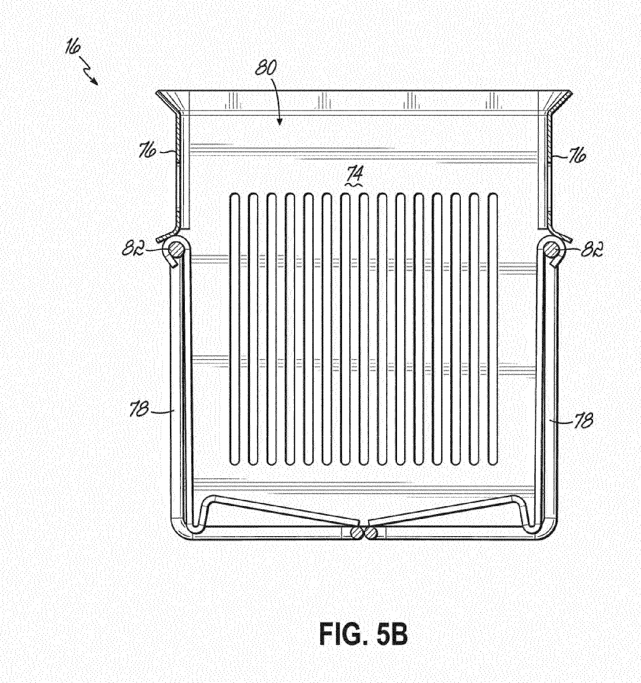

FIGS. 5A and 5B show the basket with the angled panels 78 in the closed position. Specifically, FIG. 5A more clearly shows some details of the product discharge mechanism 84 and interactions of the product discharge mechanism 84 with the angled panels 78. Further, FIG. 5B shows the rear of the basket 16 when the angled panels 78 are in the closed position.

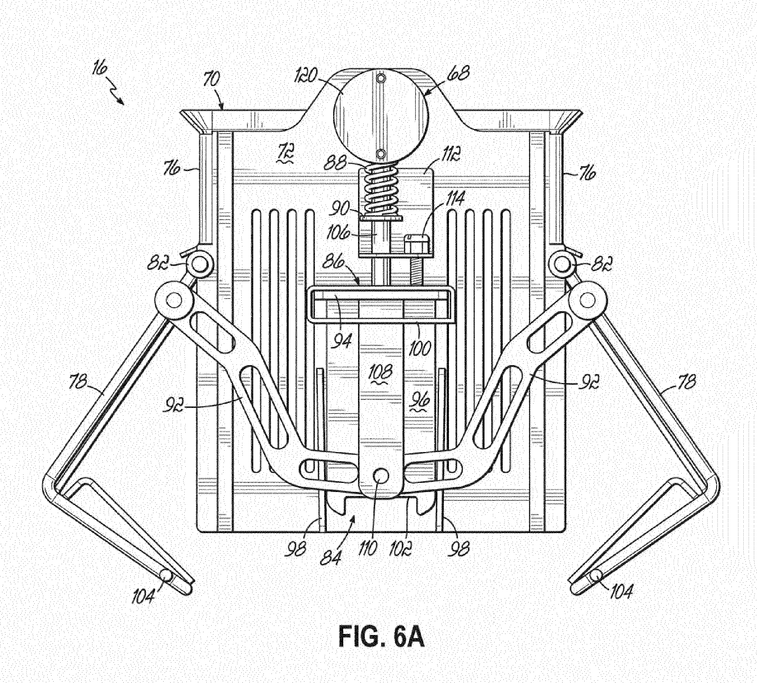

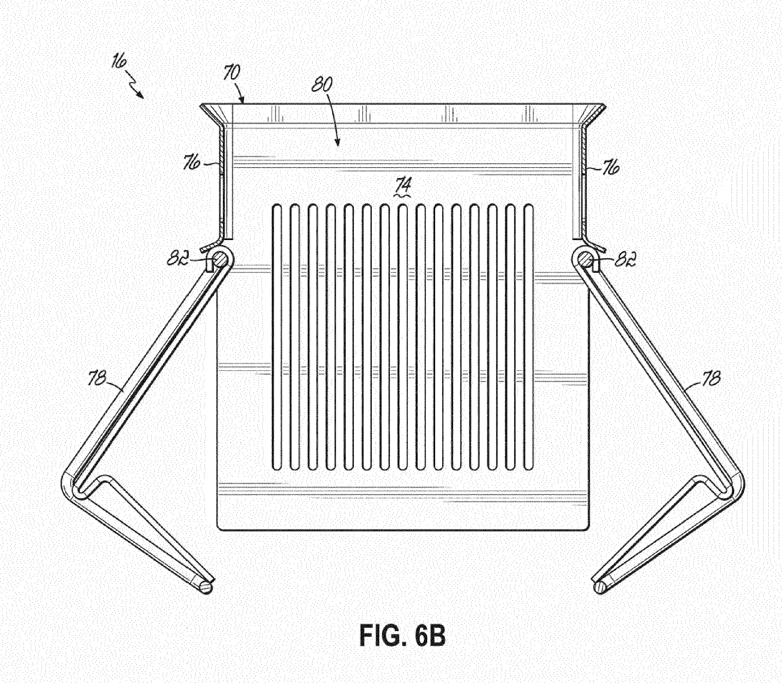

Referring now to FIG. 6A, the Figure shows the front of the basket 16-and specifically the product discharge mechanism 84-when the angled panels 78 are in an open position. Further, FIG. 6B shows the rear of the basket 16 when the angled panels 78 are in the open position.

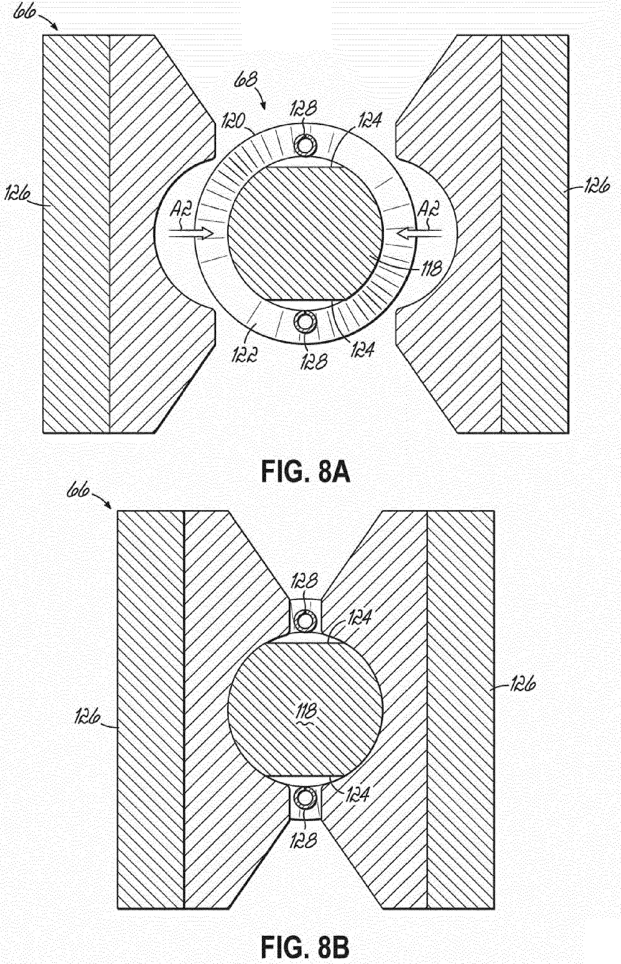

Referring to FIGS. 7A-7C, the Figures show an embodiment of a pickup point 68 of a basket 16. The pickup point 68 is in the form of a spool that may be grasped by the clamping gripper 66, as shown and described in relation to FIGS. 8A and 8B. The pickup point 68 includes a cylindrical main body 116. The main body 116 connects the pickup point 68 to the front surface of the front panel 72 of the basket 16. Extending outwardly from the main body 116 is the cylindrical neck portion 118 of the pickup point 68. In an embodiment, the neck portion 118 is smaller is diameter than the main body 116. The neck portion 118 is the part of the pickup point 68 intended to be gripped, by the clamping gripper 66. Extending outwardly from the neck portion 118 is the cylindrical head portion 120. In an embodiment, the head portion 120 is greater in diameter than the neck portion 118. The neck portion 118 being smaller in diameter than the main body 116 and the head portion 120 is intended to make it easier to grip the neck portion 118. Further, the main body 116 and the head portion 120 may be tapered inwards towards the neck portion 118 to further aid in gripping the neck portion 118. Moreover, tapered portions 122 of the main body 116 and head portion 120 will help to correct potential misalignment of the clamping gripper 66 when the clamping gripper 66 initiates contact with the pickup point 68.

Further, in an embodiment the pickup point 68 includes additional features to increase the stability of the basket 16 when picked up and transported via the pickup point 68. To that end, in an embodiment the neck portion 118 of the pickup point 68 features a flat surface 124 located along a chord of a cross-section of the neck portion 118. For example, the flat surfaces 124 may be located on the top and bottom of the neck portion 118. The flat surfaces 124 help to prevent the pickup point 68 from rotating within the grip of the clamping gripper 66 when picked up to the transported by offering space for the jaws 126 of the clamping gripper 66 to rest. To further prevent the pickup point 68 from rotating within the grasp of the clamping gripper 66, dowels 128 are added on the top and bottom of the pickup point 68. For example, in an embodiment the dowels 128 may extend over the flat surfaces 124. The dowels 128 extend from the head portion 120 to the main body 116 thereby spanning the neck portion 118. Like the flat surfaces 124, the dowels 128 provide a further feature for the clamping gripper 66 to rest against to prevent the pickup point 68 from rotating within the clamping gripper 66.

Referring now to FIGS. 8A and 8B, these Figures show engagement between the clamping gripper 66 of the gantry 24 and the pickup point 68 of a basket 16 in accordance with the embodiments of this invention. The gantry system 22 includes a gantry 24 which, in turn, includes a clamping gripper 66. In one embodiment, the clamping gripper 66 is a two-piece clamping mechanism which engages with the pickup point 68 of a basket 16 from opposing sides.

As shown in FIG. 8A, the clamping gripper 66 includes a pair of jaws 126. In an embodiment, the jaws 126 are C-shaped and spaced apart from each other a distance equal to or greater than the diameter of the head portion 120 of the pickup point 68. Each jaw 126 of the pair of jaws 126 is arranged on a side of the pickup point 68. Upon receiving a signal from the gantry control 26, the clamping gripper 66 engages with and secures the pickup point 68 of the basket 16 within the clamping gripper 66. When the clamping gripper 66 is activated (as indicated by arrows A2), each jaw 126 engages with a side of the pickup point 68 to snugly sandwich the pickup point 68 between the C-shaped jaws 126-thereby securing the pickup point 68 in the clamping gripper 66. Further, the interior edges of each of the jaws 126 can be contoured to facilitate easier gripping of the pickup point 68. Like the tapered main body 116 and head portion 120 of the pickup point 68 (e.g., as shown in FIGS. 7A-7C), the jaws 126 may similarly be fashioned to allow for the clamping gripper 66 to correct for slight errors in alignment between the basket 16 and the clamping gripper 66. Such tapering and contouring makes it easier for the jaws 126 of the clamping gripper 66 to engage with the pickup point 68, even when the pickup point 68 and clamping gripper 66 are not perfectly aligned. The engagement of the clamping gripper 66 and the pickup point 68 defines a single-location engagement between the gantry 24 and the basket 16 in this embodiment.

As shown in FIG. 8B, the two-piece clamping gripper 66 is clamped into engagement with the pickup point 68. To effectuate the engagement, the clamping gripper 66 may be pneumatically powered. However, it is to be understood that the clamping gripper 66 could be alternatively powered-hydraulically or electrically, for example. In an embodiment, the clamping gripper 66 clamps in engagement with the pickup point 68 in such a way to prevent the basket 16 from uncontrollably rotating when the basket 16 is engaged with the gantry 24 (e.g., when the basket 16 is being moved from one position to another). This engagement of the clamping gripper 66 and the pickup point 68 improves the operation of the gantry 24 and the basket 16 as compared to prior known designs for these reasons, while also enabling just a single pickup point on the basket 16 to be used in this system 10, thereby simplifying the structure needed.

Additional structure may be provided adjacent the pickup point 68 to help avoid any undesirable or uncontrolled pivoting of the basket 16 during engagement and movement with the gantry 24. For example, as shown in FIGS. 7A-7C the pickup point 68 includes dowels 128 that span the distance from the head portion 120 to the main body 116 (above and below the neck portion 118) as well as flat surfaces 124 on the neck portion 118 that provide for more secure engagement between the clamping gripper 66 and the pickup point 68. To that end, the jaws 126 of the clamping gripper 66 engage with the dowels 128 and flat surfaces 124 to help avoid any undesirable or uncontrolled pivoting of the basket 16 during engagement and movement with the gantry 24. In this regard, preventing uncontrolled rotational movements of the basket 16 during engagement with the gantry 24 serves to prevent a basket 16 engaged with the gantry 24 from impacting other baskets 16 at the system 10 or fryer 12, thereby preventing damage to baskets 16, the gantry 24, the fryer 12, or the system 10, as well as preventing food product spills and/or cycle delays associated with such spills and impacts. The improved speed and basket workflow management is therefore enabled in part by this engagement of baskets 16 with the gantry 24.

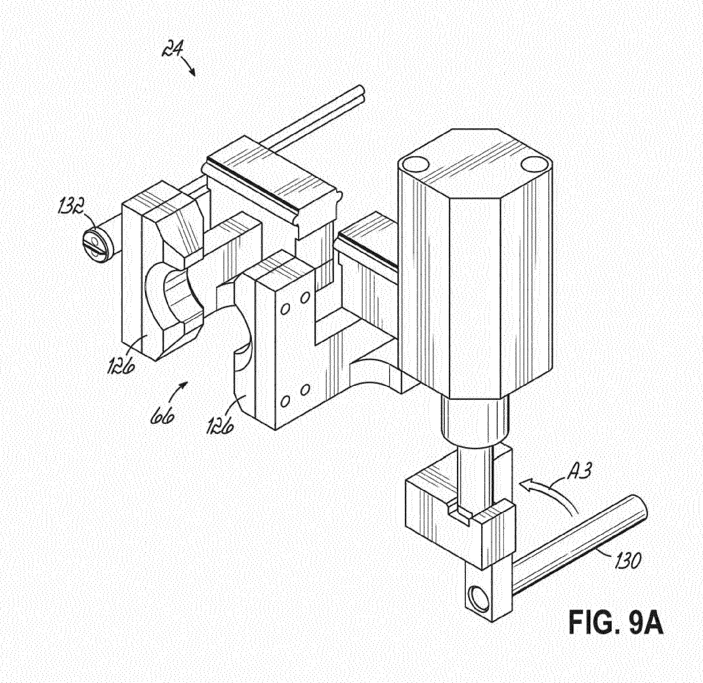

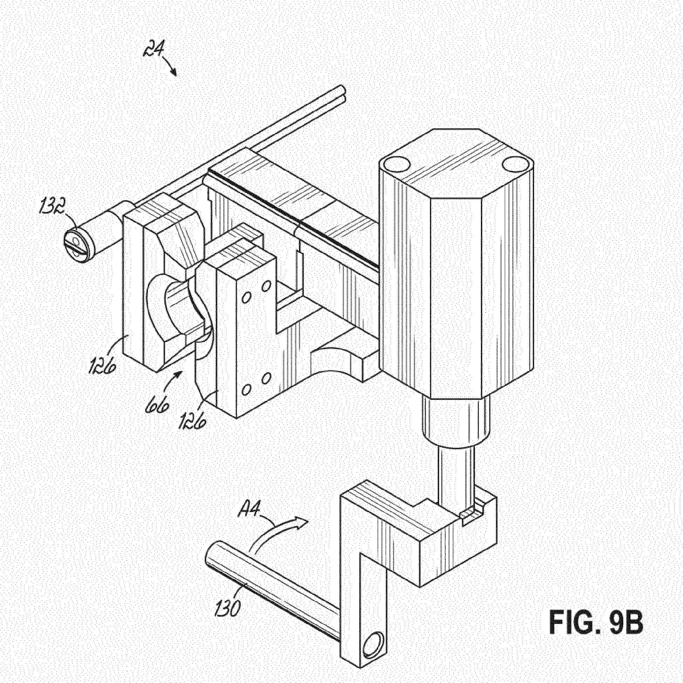

Referring now to FIGS. 9A and 9B, the Figures show a portion of the gantry 24 in greater detail. Specifically, the Figures show the relationships between clamping gripper 66, actuator arm 130, and basket detection device 132. The clamping gripper 66, actuator arm 130, and basket detection device 132 work in concert to allow for the gantry 24 to pick up and transport baskets 16 as well as to dispense food product 14. In an embodiment, the actuator arm 130 is in the form of an elongated rod that is generally cylindrically shaped, attached to the gantry 24, and located on a side of the clamping gripper 66 and the basket detection device 132 is located on an opposing side of the clamping gripper 66. It is to be understood that alternative arrangements are envisioned. With respect to the actuator arm 130, FIG. 9A shows the actuator arm 130 in a retracted position. In the retracted position, the actuator arm 130 is held away from the basket 16 (e.g., rotated 90° out of the way) to prevent inadvertent contact with the basket 16 that could cause uncontrolled and/or unintended movement and/or openings of the basket 16. Arrow A3 illustrates the transition of the actuator arm 130 from the retracted position to the extended position. In transitioning to the extended position, the actuator arm 130 rotates and moves upwardly with a force to engage with the product discharge mechanism 84.

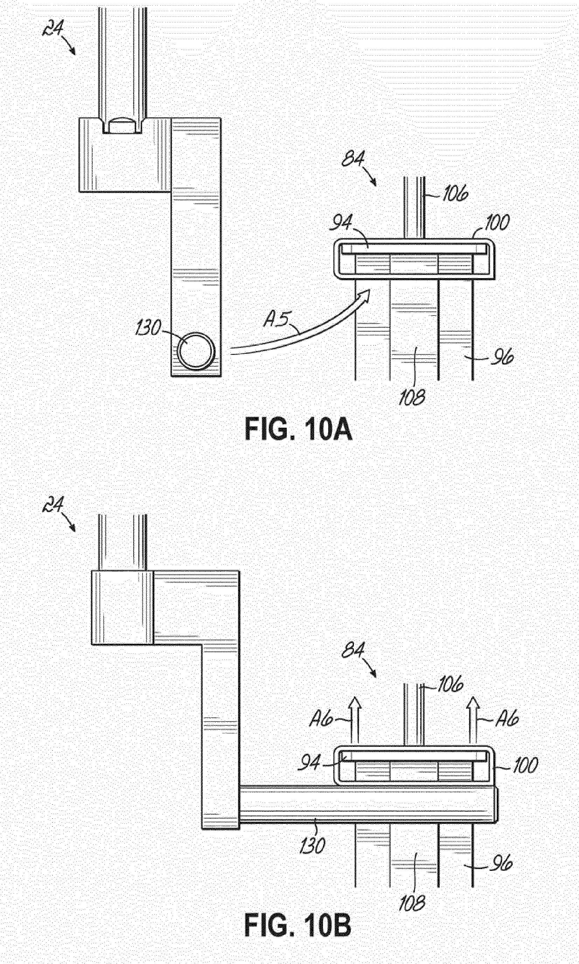

FIG. 9B shows the actuator arm 130 in the extended position. In the extended position, the actuator arm 130 is positioned to interact with the product discharge mechanism 84 to cause the basket 16 to dispense food product 14. Such interaction is described in greater detail with respect to FIGS. 10A and 10B. Arrow A4 illustrates the transition of the actuator arm 130 from the extended position to the retracted position. Pneumatic power is used to move the actuator arm 130 from the retracted position to the extended position and back, as demonstrated by arrows A3 (in FIG. 9A) and A4 (in FIG. 9B). It is to be understood that the actuator arm 130 could be alternatively powered-hydraulically or electrically, for example.

Referring now to both FIGS. 9A and 9B, the Figures also show the basket detection device 132. The basket detection device 132 is attached to the gantry 24 and is configured to detect the presence of a basket 16 when a basket 16 is located in front of the clamping gripper 66. The basket detection device 132 is used to line up the jaws 126 of the clamping gripper 66 with the pickup point 68 of the basket 16. The basket detection device 132 can take on many forms. For example, in FIGS. 9A and 9B the basket detection device 132 is shown as a laser. However, the basket detection device 132 could also be a proximity switch or a torque sensor. Further, it is to be understood that the basket detection device 132 could take on other forms besides those explicitly described herein.

Referring now to FIGS. 10A and 10B, the Figures show the interaction between the actuator arm 130 of the gantry 24 and the product discharge mechanism 84 of the basket 16. In FIG. 10A, the actuator arm 130 is in the retracted position-held away from the basket 16 to prevent inadvertent contact with the basket 16. Arrow A5 illustrates the path that the actuator arm 130 will take to interact with the product discharge mechanism 84. Specifically, the actuator arm 130 will rotate 90° towards the basket 16 and move upwards with a force to meet and lift the collar 94, thereby overcoming the bias (e.g., spring bias) of the biasing element 88. Such actions can happen concurrently or in individual stages.

FIG. 10B shows the actuator arm 130 in the extended position and interacting with the product discharge mechanism 84.

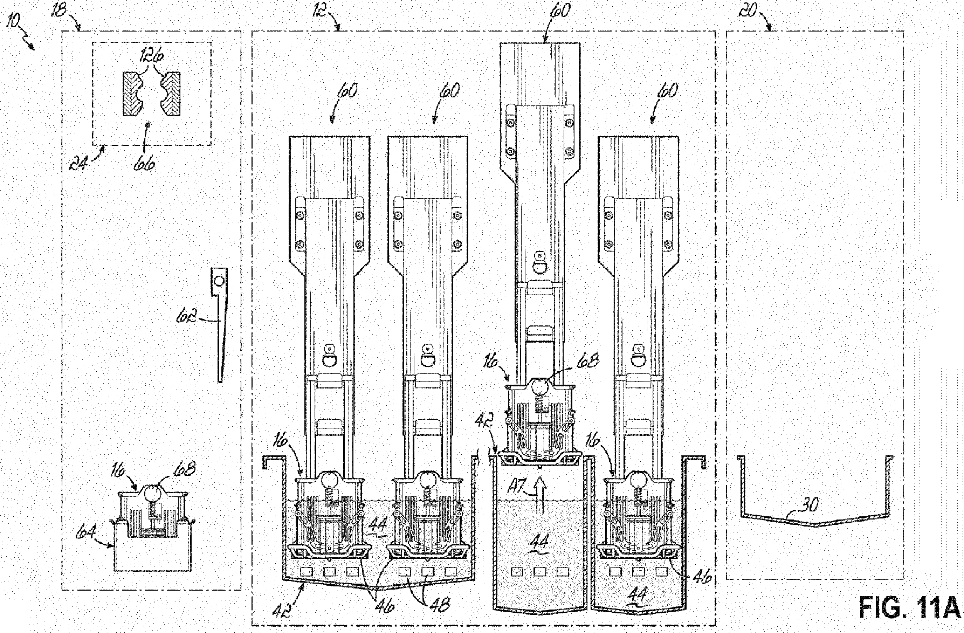

Referring now to FIGS. 11A-11G, these Figures show a series of steps defining a basket loading cycle and a basket discharge cycle according to embodiments which are not within the scope of the claims, each of which may be repeatedly performed to manage basket workflow at the cooking system 10. As evidenced in these workflow Figures, the newly-developed basket-gantry interface of the system 10 described herein helps achieve more reliable and precise movements of the baskets 16 and a quicker cycle time for automated cooking of various food products.

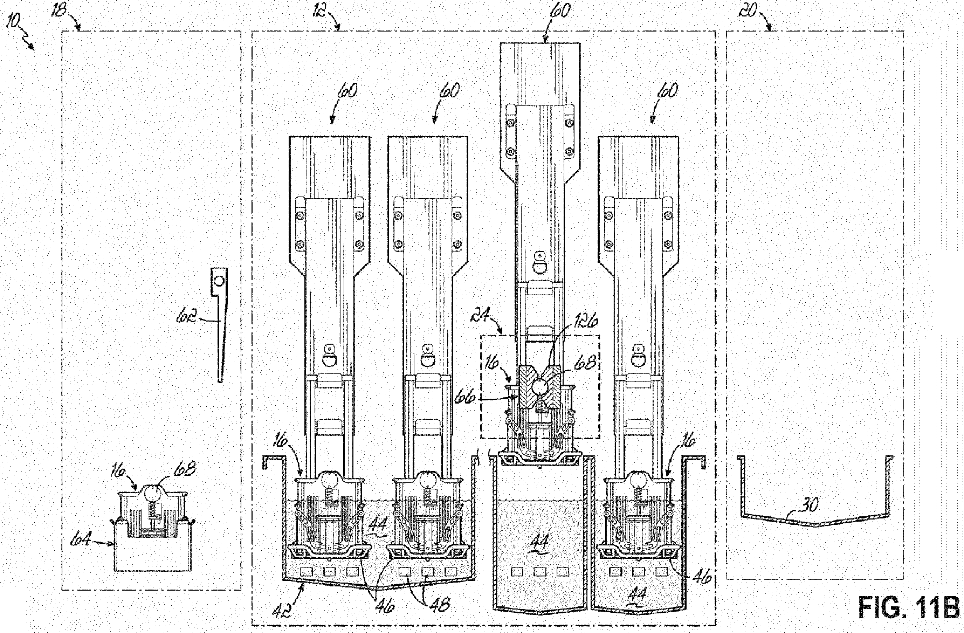

Referring to FIG. 11A, the Figure shows a basket 16 filled with cooked food product 14 sitting on a platform 46 after exiting a fryer vat 42. At the end of the cooking cycle, the vertical transport assembly 60 lifts the platform 46 on which the basket 16 sits, thus raising the basket 16 from the fryer vat 42 and out of the heated cooking medium 44, as shown, for example, by arrow A7. The basket 16 is waiting to be picked up by the gantry 24, which is shown positioned by the dispensing freezer 18 in FIG. 11A. When the gantry 24 receives a signal from the gantry control 26 and/or system controller 25, the gantry 24 will move to the platform 46 holding the filled basket 16 and engage the basket 16, as described in greater detail below with reference to FIG. 11B. Further, the Figure shows a basket 16 in the basket movement receptacle 64 located at the filling location. At the filling location, the dispenser freezer 18 dispenses uncooked food product 14 into the basket 16 in preparation of transport by the gantry 24 to a fryer 12.

Referring to FIG. 11B, the Figure shows the gantry 24, after receiving a signal from the gantry control 26 and/or system controller 25, engaging with the filled basket 16 on the platform 46. To line up the clamping gripper 66 with the pickup point 68 of the basket 16, the gantry 24 can employ a basket detection device 132 (e.g., proximity switch, torque sensor, laser, etc.) configured to detect the presence of a basket 16 in front of the clamping gripper 66. The basket detection device 132 is addressed in greater detail above with respect to FIGS. 9A and 9B. Once properly lined up, the gantry 24 activates the jaws 126 (e.g., pneumatically) of the clamping gripper 66 and secures the pickup point 68 of the basket 16 between the jaws 126. The engagement of the jaws 126 with the pickup point 68 is described in greater detail with respect to FIGS. 8A and 8B. In general, the clamping gripper 66 is configured to prevent uncontrolled rotational movements of the basket 16 when the basket 16 is transported. Such helps to avoid impacts of the basket 16 with other elements (e.g., other baskets 16, parts of the fryer 12, etc.) of the automated cooking system 10.

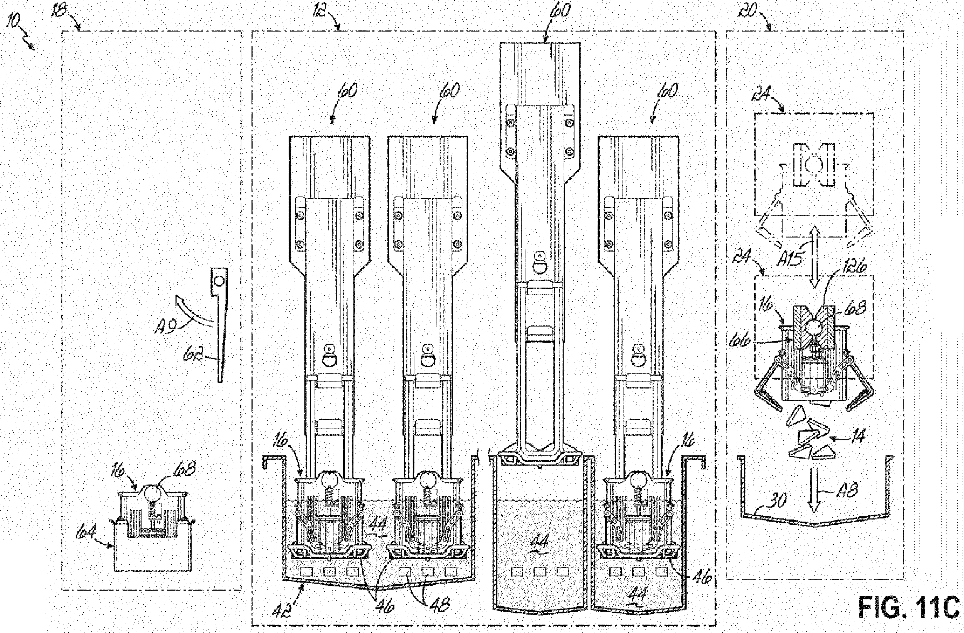

Referring to FIG. 11C, the Figure shows the basket 16 filled with cooked food product 14 suspended by the gantry 24 in a position at a height above the hot holding station 20. Further, FIG. 11C shows the gantry 24, upon receiving a signal from the gantry control 26 and/or system control 25, actuating the filled basket 16 to open the bottom of same and thereby discharge the cooked food product 14 into the hot holding receiving area 30 of the hot holding station 20, as shown by arrow A8. Actuation of the product discharge mechanism 84 is described in greater detail above with reference to FIGS. 10A and 10B; however, in short the actuator arm 130 of the gantry 24 interacts with the product discharge mechanism 84 to cause the basket 16 to discharge the cooked food product 14 contained therein.

Further, as shown in the Figure in phantom, the gantry 24 can vary the height above the hot holding station 20 at which this discharge step occurs depending on the specific type of food product 14 contained within the basket 16. For example, one cooked food product 14 may be discharged at a first height while a different cooked food product 14 may be discharged at a different, second height either higher or lower than the first height. Further, cooked food product 14 may be discharged while the basket 16 is moving from a first height to a second height, as shown by arrow A15. Such is helpful if the cooked food product 14 is long and fragile, for example, to prevent the cooked food product 14 from getting damaged by the basket 16 or by the drop impact into the hot holding station 20. Regardless of the discharge height, after discharge from the basket 16 the cooked food product 14 is then held in the hot holding receiving area 30 for further preparation and packaging by an operator.

Furthermore, and still referring to FIG. 11C, the Figure shows the staging shelf 62 preparing for the arrival of an empty basket 16. Sometime before an empty basket 16 arrives at the staging shelf 62, the gantry control 26 and/or system controller 25 sends a signal to the staging shelf 62 so that the staging shelf 62 pivots into a (generally horizontal) deployed position from a stowed position (e.g., as shown in FIGS. 11A and 11B), as illustrated by arrow A9. With the staging shelf 62 in the deployed position, the staging shelf 62 is ready to receive an empty basket 16 from the gantry 24.

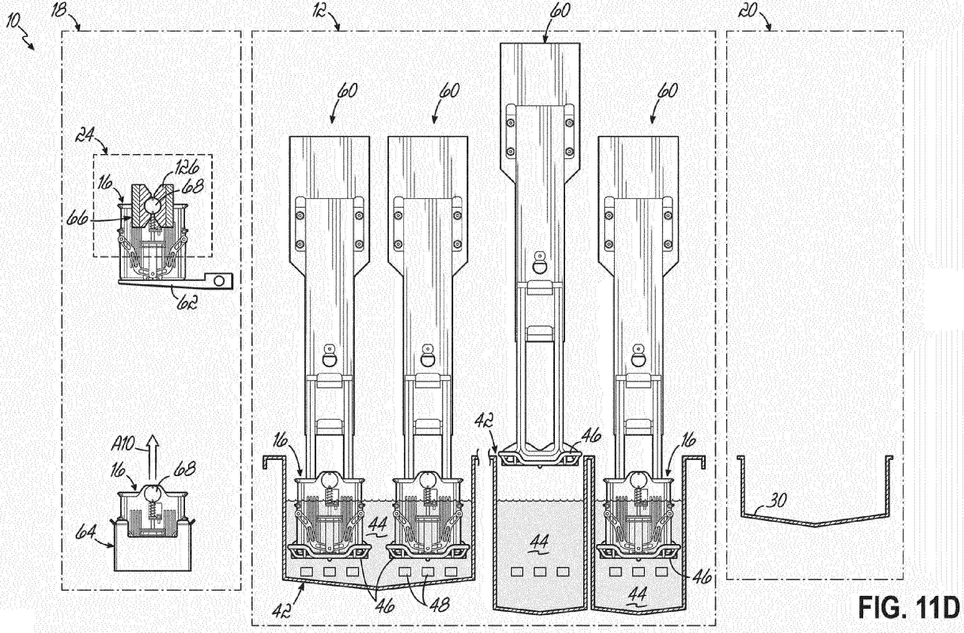

Referring to FIG. 11D, the Figure shows the gantry 24, at the direction of the gantry control 26 and/or system controller 25, transporting the basket 16 from a position above the hot holding station 20 (after discharging cooked food product 14) to the staging shelf 62. The gantry 24 disengages with the basket 16 and leaves the basket 16 on the staging shelf 62. The empty basket 16 is then ready to be engaged by the gantry 24 again later when customer demand necessitates.

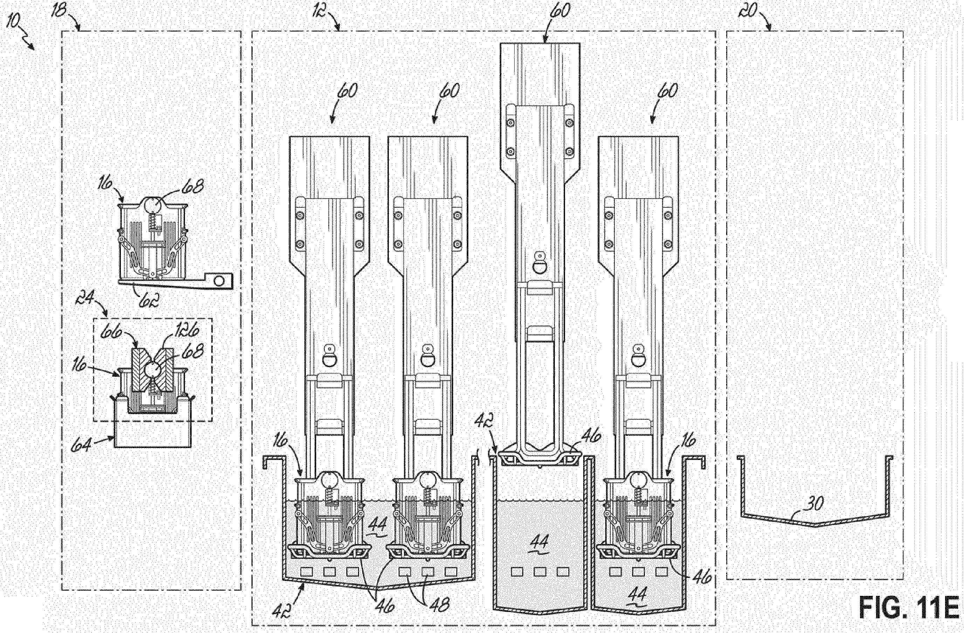

Further, FIG. 11D shows a basket 16 in the basket movement receptacle 64 being transported, as indicated by arrow A10. After a basket 16 has been filled by the dispensing freezer 18 at a filling location (as shown starting in FIG. 11A), the basket movement receptacle 64 moves (if necessary) the basket 16 into a pickup position such that the basket 16 is ready to be engaged by the gantry 24. It is to be understood that the filling location and the pickup location may be the same position and thus movement from the filling location to the pickup location may be unnecessary. Once in the pickup position, the filled basket 16 waits in the basket movement receptacle 64 until the basket 16 is engaged by the gantry 24, as shown in FIG. 11E. These movements can occur simultaneous to other actions being taken by the gantry 24 at the fryer 12.

Referring to FIG. 11E, the Figure shows a basket 16 filled with uncooked food product 14 in the basket movement receptacle 64, located in a pickup position adjacent the dispensing freezer 18, being engaged by the gantry 24. After dropping off the empty basket 16 onto the staging shelf 62 (as shown in FIG. 11D), the gantry 24 moves downwardly to the basket movement receptacle 64 to engage the next basket 16.

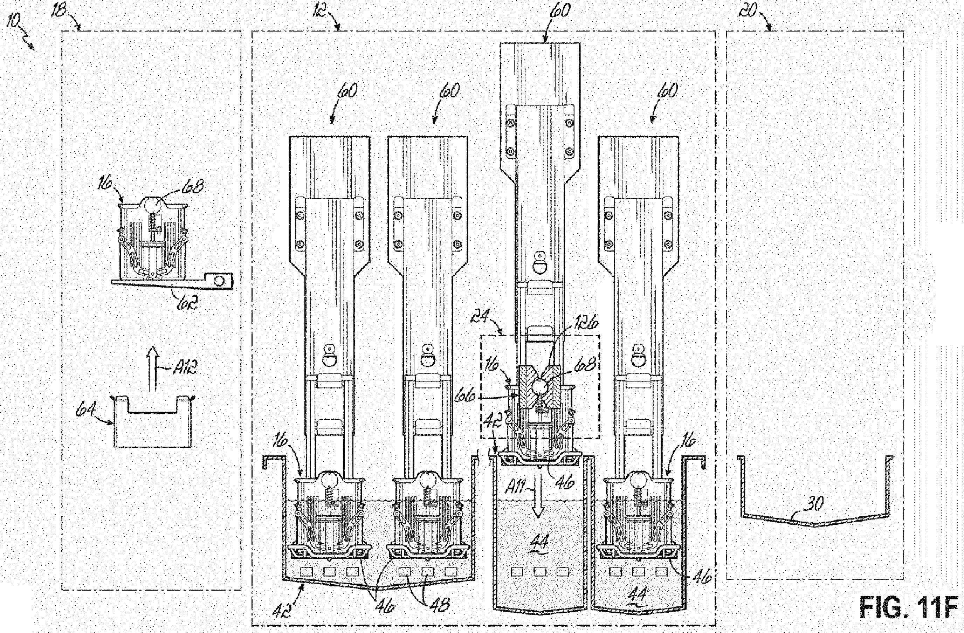

Referring to FIG. 11F, the gantry 24, after receiving a signal from the gantry control 26, moves the basket 16 from the basket movement receptacle 64 to an open platform 46 above a fryer vat 42. Which platform 46 the basket 16 should be moved to is typically determined by the system controller 25. Note that although a filled basket 16 was previously shown in FIG. 11A at the platform 46 where the gantry 24 places the new basket 16 in FIG. 11F, any available appropriate and available platform 46 could be utilized.

Once the gantry 24 has placed a basket 16 on an open platform 46, the gantry 24 disengages with the basket 16 and leaves the basket 16 on the platform 46 above the fryer vat 42. The platforms 46, on which the baskets 16 sit, are attached to the vertical transport assemblies 60. Upon receiving a signal to initiate a cooking cycle from the system controller 25, the vertical transport assembly 60 then lowers the basket 16, filled with uncooked food product 14, into a cooking medium 44 for a cooking cycle, as shown by arrow A11. These actions can automatically occur at the cooking system 10 while the gantry 24 moves to perform actions on other baskets 16 and platforms 46.

Further, FIG. 11F shows the basket movement receptacle 64 moving upwards, as shown by arrow A12, towards the staging shelf 62 in order to transfer the empty basket 16 on the staging shelf 62 from the staging shelf 62 to the basket movement receptacle 64. The staging shelf 62 can be pivoted to the generally vertical, stowed position to complete the transfer of the basket 16 into the basket movement receptacle 64.

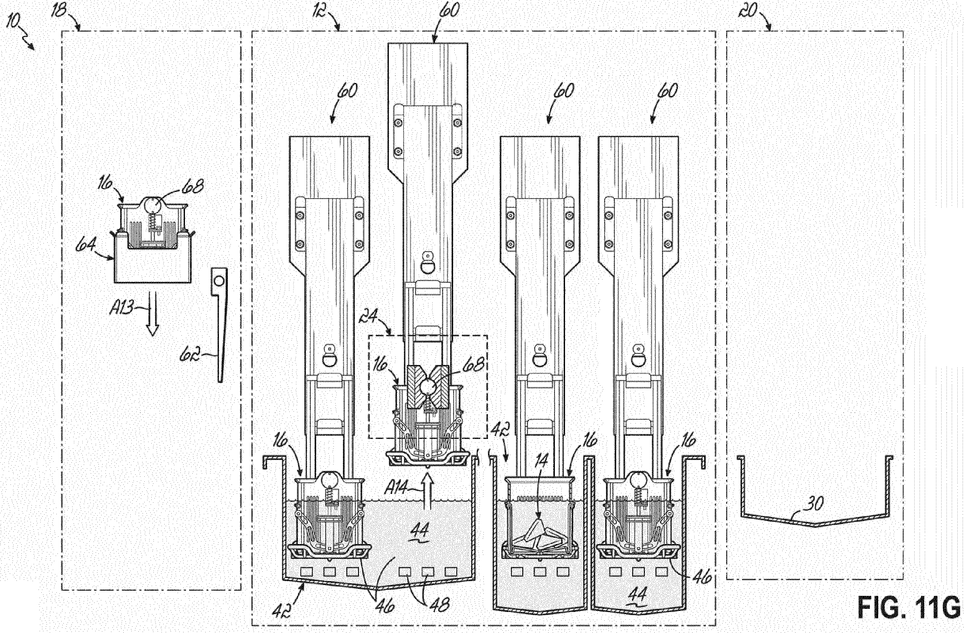

Referring to FIG. 11G, the Figure shows a completed transfer of the basket 16 from the staging shelf 62 to the basket movement receptacle 64. After a successful transition, the basket movement receptacle 64 transports the basket 16 downwardly to the filling location, as indicated by arrow A13. The basket 16 is then filled with uncooked food product 14 and awaits later engagement by the gantry 24 to the bring the basket 16 to a platform 46 above a fryer vat 42. Further, FIG. 11G shows, in the leftmost fryer vats 42, a basket 16 emerging from the cooking medium 44 in a fryer vat 42 (with cooked food product 14), as shown by arrow A14. Once emerged from the fryer vat 42, the basket 16 is engaged by the gantry 24 to be brought to the hot holding station 20 to discharge the cooked food product 14.

Generally, FIGS. 11A-11G show features of the system's 10 basket loading and discharge cycles for managing basket 16 workflow during food preparation at an automated cooking system 10. The automated cooking system 10 prioritizes and orders the basket loading cycles and basket discharge cycles for the gantry system 22 to satisfy varying levels of demand for cooked food product 14 from the automated cooking system 10. This arrangement allows for successful management of up to 6 or more baskets 16 cooking food product 14 simultaneously at the fryer 12, which can result, for example, in throughput levels of about 68,04 kg (150 pounds) of cooked French fries an hour in one operational example. These operational throughput levels are enabled at least in part by the innovative basket-gantry interface described in this application.

It is envisioned that the basket loading and basket discharge cycles could include additional or fewer steps in other embodiments. Nevertheless, the gantry 24 is configured to manage the workflow of 6 or more baskets 16 and cooking stations (platforms 46) at the fryer 12 simultaneously to provide an increased maximum cooking volume throughput of the cooking system 10. The automatic cooking system 10 therefore improves the field of cooking equipment and methodologies by limiting the need for operator intervention (and associate expense) while maximizing how much food product 14 can be cooked and prepared within the standard space used by fryers in commercial setting kitchens. Additionally, as described next, the design of the gantry 24 in this cooking system 10 advantageously controls the baskets 16 during the rapid movements of the basket loading and discharge cycles to avoid uncontrolled pivoting or rotations and/or undesired impacts with other baskets 16 held at the cooking system 10.

Generally, many benefits may arise through use of the automated cooking system 10. The automated cooking system 10 allows the operator to perform other tasks while the automated cooking system 10 is working. Additionally, an automated cooking system 10 allows for improved quality control of the food product 14 (e.g., precise cooking time, more precise weight of product being cooked, optimized heat management by alternating product drops between the various cooking chambers, or synchronized mini-filtration during idle periods). Additionally, the automated cooking system 10 increases the hourly product throughput versus a manually-operated system. Further, the automated cooking system 10 provides superior up-time and predictive fault diagnostics due to continual baseline performance comparisons and configurable warning thresholds.

Additional benefits of the automated cooking system 10 include, for example, an improved operator experience, availability of manual override at any point of the process, easy cleaning (typical cooking chamber cleaning procedure where the actuator surfaces can be easily wiped down), the system 10 fits into customer's current fryer width footprint, the gantry 24 fits under the 162,56 cm (64 inch) minimum hood clearance, minimal interference with existing fire suppression systems due to the design of the system 10 and fryer 12, making retrofit and site approvals easier, moving parts and controls being shielded from operator and extreme heat, optimized motions allowing for minimal speeds to reduce risk of operator contact, and being retrofittable to existing fryers.

## Claims

1. An automated cooking system (10) comprising:
a fryer basket (16), comprising:
a frame (70) defining a storage space (80) within the basket (16);
a pickup point (68) operatively connected to the frame (70), wherein the pickup point (68) comprises:
a main body (116), the main body (116) operatively connected to the frame (70) and extending outward therefrom; and
a gantry (24), comprising:
a clamping gripper (66) that clamps a pair of jaws (126) into engagement with the pickup point (68) of the basket (16), wherein the gantry (24) engages with the basket (16) at only the pickup point (68) and this single-location engagement between the pair of jaws (126) and the pickup point (68) is configured to prevent uncontrolled rotational movements of the basket (16) when the basket (16) is moved,
**characterized in that** the fryer basket (16) comprises further
a neck portion (118) attached to and extending outwardly from the main body (116), wherein the neck portion (118) is narrower in diameter than the main body (116) and wherein the neck portion (118) is the part of the pickup point (68) that is intended to be gripped; and
a head portion (120) attached to and extending outwardly from the neck portion (118), wherein the head portion (120) is greater in diameter than the neck portion (118).

2. The automated cooking system (10) of claim 1, wherein the head portion (120) is substantially coextensive in diameter with the main body (116).

3. The automated cooking system (10) of claim 1, wherein the main body (116) and the head portion (120) are tapered inwards towards the neck portion (118) to help correct potential misalignment of the jaws (126) of the clamping gripper (66) on the pickup point (68).

4. The automated cooking system (10) of claim 1, wherein the neck portion (118) is substantially coextensive in width to the jaws (126) of clamping gripper (66).

5. The automated cooking system (10) of claim 1, wherein the pickup point (68) comprises:
a flat surface (124) along a chord of a cross-section of the neck portion (118); and
a dowel (128) located above the flat surface (124) of the neck portion (118), wherein the dowel (128) spans a distance from the head portion (120) to the main body (116),
wherein at least the dowel (128) is configured to engage with the jaws (126) of the clamping gripper (66) to prevent uncontrolled rotational movements of the basket (16) when the basket (16) is moved as to avoid impacts of the basket (16) with any other basket (16) of the automated cooking system (10).

6. The automated cooking system (10) of claim 1, wherein the each of the jaws (126) is C-shaped as to snugly fit the pickup point (68) between the pair of jaws (126) when engaging with the basket (16).

7. The automated cooking system (10) of claim 1, wherein an edge of the jaw (126) that contacts the pickup point (68) of the basket (16) is contoured to facilitate easier gripping of the pickup point (68).

8. The automated cooking system (10) of claim 1, wherein the frame (70) of the basket (16) further includes panels (72, 74, 76) configured to move between a closed position and an open position, the basket (16) further comprises a product discharge mechanism (84) positioned adjacent the frame (70) and operatively coupled to the panels (72, 74, 76), the gantry (24) further comprises an actuator arm (130) configured to interact with the basket (16), suspended in place by the clamping gripper (66), in such a way as to cause the basket (16) to discharge its contents, and wherein the actuator arm (130) is pneumatically powered.

9. The automated cooking system (10) of claim 8, wherein when not in active use the actuator arm (130) is rotated away from the front of the gantry (24) as to not cause inadvertent contact with the basket (16).

10. The automated cooking system (10) of claim 1, further comprising:
a basket detection device (132), wherein the basket detection device (132) is configured to detect a presence of a basket (16) in front of the clamping gripper (66) and wherein the basket detection device (132) is used to line up the jaws (126) of the clamping gripper (66) with the pickup point (68) of the basket (16).

11. The automated cooking system (10) of claim 10, wherein the basket detection device (132) is selected from a group consisting of a proximity switch, a torque sensor, and a laser.

## Patentansprüche

1. Automatisches Kochsystem (10), aufweisend:
einen Garkorb (16), aufweisend:
ein Gestell (70), welches einen Speicherraum (80) innerhalb des Korbs (16) festlegt;
einen operativ mit dem Gestell (70) verbundenen Aufnahmepunkt (68), wobei der Aufnahmepunkt (68) aufweist:
einen Hauptkörper (116), wobei der Hauptkörper (116) operativ mit dem Gestell (70) verbunden ist und sich von diesem nach außen hin erstreckt; und
ein Portal (24), aufweisend:
einen Klemmgreifer (66), welcher ein Paar Backen (126) in Eingriff mit dem Aufnahmepunkt (68) des Korbs (16) spannt, wobei das Portal (24) nur an dem Aufnahmepunkt (68) mit dem Korb (16) in Eingriff kommt und dieser Eingriff an einer einzelnen Stelle zwischen dem Paar Backen (126) und dem Aufnahmepunkt (68) dazu ausgebildet ist, unkontrollierten Rotationsbewegungen des Korbs (16) zu verhindern, wenn der Korb (16) bewegt wird,
**dadurch gekennzeichnet, dass** der Garkorb (16) ferner aufweist
einen an den Hauptkörper (116) angebrachten und sich von dem Hauptkörper nach außen hin erstreckenden Halsabschnitt (118), wobei der Halsabschnitt (118) einen engeren Durchmesser als der Hauptkörper (116) aufweist und wobei der Halsabschnitt (118) der Teil des Aufnahmepunkts (68) ist, der dazu vorgesehen ist, gegriffen zu werden; und
einen an dem Halsabschnitt (118) angebrachten und sich von dem Halsabschnitt (118) auswärts erstreckenden Kopfabschnitt (120), wobei der Kopfabschnitt (120) einen größeren Durchmesser hat als der Halsabschnitt (118).

2. Automatisches Kochsystem (10) nach Anspruch 1, wobei der Kopfabschnitt (120) im Durchmesser im Wesentlichen koextensiv mit dem Hauptkörper (116) ist.

3. Automatisches Kochsystem (10) nach Anspruch 1, wobei der Hauptkörper (116) und der Kopfabschnitt (120) in Richtung des Halsabschnittes (118) nach innen verjüngt sind, um zu helfen, eine potentielle Fehlausrichtung der Backen (126) des Klemmgreifers (66) an dem Aufnahmepunkt (68) zu korrigieren.

4. Automatisches Kochsystem (10) nach Anspruch 1, wobei der Halsabschnitt (118) in seiner Breite im Wesentlichen koextensiv mit den Backen (126) des Klemmgreifers (66) ist.

5. Automatisches Kochsystem (10) nach Anspruch 1, wobei der Aufnahmepunkt (68) aufweist:
eine flache Oberfläche (124) entlang einer Sehne eines Querschnitts des Halsabschnitts (118); und
einen Stift (128), der oberhalb der flachen Oberfläche (214) des Halsabschnitts (118) angeordnet ist, wobei der Stift (128) eine Distanz vom Kopfabschnitt (120) zum Hauptkörper (116) überspannt,
wobei wenigstens der Stift (128) dazu ausgebildet ist, mit den Backen (126) des Klemmgreifers (66) in Eingriff zu kommen, um unkontrollierte Rotationsbewegungen des Korbs (16) zu verhindern, wenn der Korb (16) bewegt wird, zum Verhindern von Stößen des Korbs (16) mit einem anderen Korb (16) des automatischen Kochsystems (10).

6. Automatisches Kochsystem (10) nach Anspruch 1, wobei jede der Backen (126) c-förmig ausgebildet ist, um den Aufnahmepunkt (68) zwischen den Backen (126) beim Eingreifen mit dem Korb (16) eng anliegend einzupassen.

7. Automatisches Kochsystem (10) nach Anspruch 1, wobei eine Kante der Backe (126), welche den Aufnahmepunkt (68) des Korbs (16) kontaktiert, konturiert ist, um ein einfacheres Greifen des Aufnahmepunkts (68) zu erleichtern.

8. Automatisches Kochsystem (10) nach Anspruch 1, wobei das Gestell (70) des Korbs (16) ferner Fächer (72, 74, 76) beinhaltet, wobei die Platten dazu ausgebildet sind, sich zwischen einer geschlossenen Stellung und einer offenen Stellung zu bewegen, wobei der Korb (16) ferner einen Produkt-Entlademechanismus (84) aufweist, wobei der Produkt-Entlademechanismus (84) an das Gestell (70) angrenzend positioniert ist und operativ mit den Fächern (72, 74,76) gekoppelt ist, wobei das Portal (24) ferner einen Stellarm (130) aufweist, der dazu ausgebildet ist, mit dem Korb (16) zusammenzuwirken, der mit dem Klemmgreifer (66) in einer solchen Weise aufgehängt ist, den Korb (16) dazu zu veranlassen, seinen Inhalt zu entladen, und wobei der Stellarm (130) pneumatisch angetrieben ist.

9. Automatisches Kochsystem (10) nach Anspruch 8, wobei der Stellarm (130), wenn nicht in aktiver Nutzung, von der Vorderseite des Portals (24) weggedreht wird, um keinen versehentlichen Kontakt mit dem Korb (16) zu verursachen.

10. Automatisches Kochsystem (10) nach Anspruch 1, ferner aufweisend:
eine Korberkennungseinheit (132), wobei die Korberkennungseinheit (132) dazu ausgebildet ist, ein Vorhandensein eines Korbs (16) vor dem Klemmgreifer (66) zu erkennen und wobei die Korberkennungseinheit (132) genutzt wird, um die Backen (126) des Klemmgreifers (66) mit dem Aufnahmepunkt (68) des Korbs (16) auszurichten.

11. Automatisches Kochsystem (10) nach Anspruch 10, wobei die Korberkennungseinheit (132) aus einer Gruppe ausgewählt ist, die Gruppe bestehend aus einem Näherungsschalter, einem Drehmomentsensor und einem Laser.

## Revendications

1. Système de cuisson automatisé (10), comprenant :
un panier (16) de friteuse, comprenant :
un cadre (70) définissant un espace de stockage (80) à l'intérieur du panier (16);
un point de ramassage (68) relié fonctionnellement au cadre (70), le point de ramassage (68) comprenant :
un corps principal (116), le corps principal (116) étant relié fonctionnellement au cadre (70) et s'étendant vers l'extérieur à partir de celui-ci; et
un portique (24), comprenant :
un préhenseur à serrage (66) qui serre une paire de mâchoires (126) en prise avec le point de ramassage (68) du panier (16), le portique (24) entrant en prise avec le panier (16) uniquement au point de ramassage (68) et cette entrée en prise en un seul endroit entre la paire de mâchoires (126) et le point de ramassage (68) étant configurée pour empêcher des mouvements de rotation incontrôlés du panier (16) lorsque le panier (16) est déplacé,
**caractérisé en ce que** le panier (16) de friteuse comprend en outre
une portion de collet (118) attachée au corps principal (116) et s'étendant vers l'extérieur à partir de celui-ci, la portion de collet (118) ayant un diamètre plus étroit que le corps principal (116) et la portion de collet (118) étant la partie du point de ramassage (68) qui est destinée à être saisie; et
une portion de tête (120) fixée à la portion de collet (118) et s'étendant vers l'extérieur à partir de celle-ci, la portion de tête (120) ayant un diamètre supérieur à celui de la portion de collet (118).

2. Système de cuisson automatisé (10) selon la revendication 1, la portion de tête (120) étant sensiblement coextensive en diamètre avec le corps principal (116).

3. Système de cuisson automatisé (10) selon la revendication 1, le corps principal (116) et la portion de tête (120) étant effilés vers l'intérieur en direction de la portion de collet (118) pour aider à corriger un désalignement potentiel des mâchoires (126) du préhenseur à serrage (66) sur le point de ramassage (68).

4. Système de cuisson automatisé (10) selon la revendication 1, la portion de collet (118) étant sensiblement coextensive en largeur avec les mâchoires (126) du préhenseur à serrage (66).

5. Système de cuisson automatisé (10) selon la revendication 1, le point de ramassage (68) comprenant :
une surface plane (124) le long d'une corde d'une section transversale de la portion de collet (118); et
un goujon (128) situé au-dessus de la surface plane (124) de la portion de collet (118), le goujon (128) s'étendant sur une distance allant de la portion de tête (120) au corps principal (116),
au moins le goujon (128) étant configuré pour venir en prise avec les mâchoires (126) du préhenseur à serrage (66) afin d'empêcher des mouvements de rotation incontrôlés du panier (16) lorsque le panier (16) est déplacé de manière à éviter des impacts du panier (16) avec tout autre panier (16) du système de cuisson automatisé (10).

6. Système de cuisson automatisé (10) selon la revendication 1, chacune des mâchoires (126) étant en forme de C de manière à ajuster fermement le point de ramassage (68) entre la paire de mâchoires (126) lors de l'entrée en prise avec le panier (16).

7. Système de cuisson automatisé (10) selon la revendication 1, un bord de la mâchoire (126) qui entre en contact avec le point de ramassage (68) du panier (16) étant profilé pour faciliter une préhension plus aisée du point de ramassage (68).

8. Système de cuisson automatisé (10) selon la revendication 1, le cadre (70) du panier (16) comprenant en outre des panneaux (72, 74, 76) configurés pour se déplacer entre une position fermée et une position ouverte, le panier (16) comprenant en outre un mécanisme de déchargement de produits (84) positionné à côté du cadre (70) et couplé fonctionnellement aux panneaux (72, 74, 76), le portique (24) comprenant en outre un bras actionneur (130) configuré pour interagir avec le panier (16), suspendu en place par le préhenseur à serrage (66), de manière à amener le panier (16) à décharger son contenu, et le bras actionneur (130) étant entraîné pneumatiquement.

9. Système de cuisson automatisé (10) selon la revendication 8, le bras actionneur (130), lorsqu'il n'est pas utilisé activement, étant tourné à l'écart de l'avant du portique (24) afin de ne pas provoquer de contact par inadvertance avec le panier (16).

10. Système de cuisson automatisé (10) selon la revendication 1, comprenant en outre :
un dispositif de détection (132) de panier, le dispositif de détection (132) de panier étant configuré pour détecter une présence d'un panier (16) devant le préhenseur à serrage (66) et le dispositif de détection (132) de panier étant utilisé pour aligner les mâchoires (126) du préhenseur à serrage (66) avec le point de ramassage (68) du panier (16).

11. Système de cuisson automatisé (10) selon la revendication 10, le dispositif de détection (132) de panier étant choisi dans un groupe constitué d'un interrupteur de proximité, d'un capteur de couple et d'un laser.
